# EUROPEAN PATENT SPECIFICATION

(11) **EP 2 015 961 B1**
(45) Date of publication and mention of the grant of the patent: **03.04.2013**
(21) Application number: 07732657.7
(22) Date of filing: 03.05.2007
(51) Int. Cl.: B60P 3/06

(54) **FLAT BED TRAILER**
FLACHBETTAUFLIEGER
REMORQUE-PLATEAU

(30) Priority: 03.05.2006 GB 0608668; 08.09.2006 GB 0617701; 05.02.2007 GB 0702124
(43) Date of publication of application: 21.01.2009
(73) Proprietor: Clutterbuck, James, Hopkins, Strensham Worcestershire WR8 9LL (GB)
(72) Inventor: GRECO, Charles, Worcestershire WR13 5HY (GB)
(74) Representative: Lambert, Ian Robert
(86) International application number: PCT/GB2007/001624
(87) International publication number: WO 2007/129054

(56) References cited:
- EP-A1- 0 826 581
- DE-U1-202004 010 777
- FR-A1- 2 642 378
- US-A- 1 776 935
- US-A- 3 885 690
- US-A- 3 912 139
- US-A- 4 612 716
- US-A- 4 772 165
- US-A- 5 516 245
- US-A- 5 607 270
- US-A- 5 971 685
- US-A- 6 077 007
- US-A- 6 099 218
- US-A1- 2002 008 184
- US-A1- 2002 012 575
- US-A1- 2005 135 894
- US-A1- 2005 220 557
- US-B1- 6 179 181
- US-B1- 6 364 141

## Description

This invention relates to flat bed trailers for transporting heavy machinery.

It is well known to transport items of heavy machinery, such as mechanical diggers and forklift devices, to a site of use using a flat bed trailer. Traditionally, the item of heavy machinery is positioned on the trailer and straps are used to secure it in place. Unfortunately, it is becoming increasingly apparent that the use of straps is less than desirable, since the item of heavy machinery is often not secured in place very effectively. Indeed, the present inventors are aware that at least one fatality caused by an item of heavy machinery that fell from a flat bed trailer during transportation.

US 2002/0008184 A1 discloses a flat bed trailer according to the preamble of claim 1.

The present invention, in at least some of its embodiments, overcomes the above described problem and provides cost effective, convenient means for securely restraining an item of heavy machinery during transportation.

According to a first aspect of the invention, there is provided a flat bed trailer for transporting heavy machinery including a floor;
a plurality of wheels suitable for travel over roads; coupling means for coupling the trailer to a towing vehicle; a pair of longitudinally extending side walls which extend at least 300 mm and less than one metre above the level of the floor;
characterised in that the flat bed trailer further includes: a plurality of restraining bars each disposable substantially laterally across the trailer from one side wall to the other side wall to restrain an item of heavy machinery when positioned in the trailer; bar retaining means for releasably retaining at least one of the restraining bars in its restraining position, wherein the bar retaining means include a plurality of bar receiving elements receiving the at least one restraining bar, and at least a pair of brackets, each located on top of a respective side wall; in which the bar retaining means are disposed on the brackets so that the bar retaining means are disposed on top of the side walls.

It is understood that flat bed trailers do not have high sided walls, although the flat bed trailers of the invention have side walls, which are low walls, which extend less than one metre and commonly less than 50 cm above the level of the trailer floor.

The item of heavy machinery may be a plant hire item, such as a mechanical digger or forklift device. The item of heavy machinery might utilise caterpillar trackers, or might be a wheeled vehicle.

Preferably, the bar retaining means releasably retain all of the restraining bars in their restraining positions. However, it may be possible to employ a bar of permanently fixed position as one of the restraining bars.

Preferably, the flat bed trailer has a pair of spaced apart restraining bars. Most preferably the pair of restraining bars are spaced by at least 750mm.

One or more of the restraining bars may be fully detachable from the trailer. In preferred embodiments, all of the restraining bars are fully detachable from the trailer.

One or more of the restraining bars may be permanently fixed to the trailer whilst being releasable from its restraining position. For example, a bar may be swingable, pivotable or otherwise moveable with respect to a permanent fixture so that the bar can be brought into or out of its restraining position.

The flat bed trailer may include one or more restraining bars which are fully detachable from the trailer and one or more restraining bars which are permanently fixed to the trailer whilst being releasable from its restraining position. In a preferred embodiment of this kind the flat bed trailer includes one restraining bar which is fully detachable from the trailer and one restraining bar which is permanently fixed to the trailer whilst being releasable from Its restraining position.

The bar retaining means include a plurality of bar receiving elements, such as collars and jaws.

The flat bed trailer includes a pair of longitudinally extending side walls, and at least some of the bar retaining means are disposed on the side walls. The trailer further includes at least a pair of brackets, each located on a side wall, and at least some of the bar retaining means may be disposed on the brackets. Each bracket is located on top of a side wall, and the bar retaining means are disposed on the brackets. Preferably, the brackets are releasably coupled to the side walls, most preferably by bolts.

Advantageously, the bar retaining means includes at least one bar retaining member which is coupleable with a restraining bar and engageable with another part of the trailer, preferably the floor of the trailer. In one embodiment, bar receiving elements are employed, and the bar retaining member provides additional support for a bar.

Advantageously, the flat bed trailer further includes a plurality of tracks disposed substantially longitudinally on the floor of the trailer for restraining the item of machinery when disposed in the trailer. The tracks provide restraint against sideways motion of the item of heavy machinery and aid in locating the item in the trailer.

Preferably, the restraining bars are stepped. This increases the clearance of the bars, enabling better restraint to be provided, and provides a structure having greater strength than a linear bar.

The flat bed trailer may be for transporting a mechanical digger having a bucket attached to a moveable arm, and may further include: a receptacle disposed on the coupling means for receiving and restraining the bucket of the mechanical digger.

It is understood that the term 'bucket' relates to the scoop of a mechanical digger which is used for excavating purposes.

Preferably, the bar retaining means releasably retain all of the restraining bars in their restraining positions. However, it may be possible to employ a bar of permanently fixed position as one of the restraining bars.

Preferably, the flat bed trailer has a pair of spaced apart restraining bars.

The flat bed trailer may include a pair of spaced apart restraining bars, the bars being spaced so that in use one of the restraining bars restrains a front portion of the mechanical digger, and the other one of the pair of restraining bars restrains a rear portion of the mechanical digger. Typically, the pair of restraining bars are spaced by at least 750mm.

One or more of the restraining bars may be fully detachable from the trailer. In preferred embodiments, all of the restraining bars are fully detachable from the trailer.

One or more of the restraining bars may be permanently fixed to the trailer whilst being releasable from its restraining position. For example, a bar may be swingable, pivotable or otherwise moveable with respect to a permanent fixture so that the bar can be brought into or out of its restraining position.

The flat bed trailer may include one or more restraining bars which are fully detachable from the trailer and one or more restraining bars which are permanently fixed to the trailer whilst being releasable from its restraining position. In a preferred embodiment of this kind the flat bed trailer includes one restraining bar which is fully detachable from the trailer and one restraining bar which is permanently fixed to the trailer whilst being releasable from its restraining position.

The bar retaining means include a plurality of bar receiving elements, such as collars and jaws.

The flat bed trailer according to the invention includes a pair of longitudinally extending side walls, and the bar retaining means are disposed on the side walls. The side walls extend at least 300mm above the level of the trailer floor. The plurality of restraining bars are disposable substantially laterally across the trailer from one side wall to the other side wall. The trailer further includes at least a pair of brackets, each located on a side wall, and the bar retaining means are disposed on the brackets. According to the invention, each bracket is located on top of a side wall, and the bar retaining means are disposed on the brackets. Preferably, the brackets are releasably coupled to the side walls, most preferably by bolts.

Preferably, the receptacle includes a frame. However, other receptacles, such as a box, might be envisaged. Preferably, the receptacle defines a substantially cuboid internal volume in which the bucket is received.

Advantageously, the bar retaining means includes at least one bar retaining member which is coupleable with a restraining bar and engageable with another part of the trailer, preferably the floor of the trailer. In one embodiment, bar receiving elements are employed, and the bar retaining member provides additional support for a bar.

Advantageously, the flat bed trailer further Includes a plurality of tracks disposed substantially longitudinally on the floor of the trailer for restraining the item of machinery when disposed In the trailer. The tracks provide restraint against sideways motion of the item of heavy machinery and aid in locating the item in the trailer.

Preferably, the restraining bars are stepped. This increases the clearance of the bars, enabling better restraint to be provided, and provides a structure having greater strength than a linear bar.

It is highly advantageous that retrofits can be provided to existing flat bed trailers (which do not fall within the scope of claim 1) conveniently and cost effectively in order to produce flat bed trailers according to claim 1.

According to a second aspect of the invention there is provided a method of restraining an item of heavy machinery including the steps of:
providing a flat bed trailer for transporting an item of heavy machinery, the flat bed trailer including a floor; a plurality of wheels suitable for travel over roads; coupling means for coupling the trailer to a towing vehicle; a pair of longitudinally extending side walls which extend at least 300 mm and less than one metre above the level of the floor; a plurality of restraining bars; bar retaining means which include a plurality of bar receiving elements; and at least a pair of brackets, each located on top of a respective side wall; in which the bar retaining means are disposed on the brackets so that at least some of bar retaining means are disposed on top of the side walls;
positioning an item of heavy machinery in the trailer; and
restraining the item of heavy machinery by disposing the restraining bars substantially laterally across the trailer from one side wall to the other side wall, at least one of the restraining bars being releasably retained in its restraining position by the bar retaining means, the plurality of bar receiving elements receiving the at least one of the restraining bars.

Flat bed trailers in accordance with the invention will now be described with reference to the accompanying drawings, in which:
Figure 1 is a perspective view of a flat bed trailer of the invention;
Figure 2 shows (a) a side view and (b) a front view of a jaw;
Figure 3 shows a side view of a collar,
Figure 4 shows (a) a front view and (b) a plan view of a front-most restraining bar;
Figure 5 shows a plan view of a pair of guide bars;
Figure 6 shows the floor of a flat bed trailer; and
Figure 7 is another perspective view of a flat bed trailer of the invention.

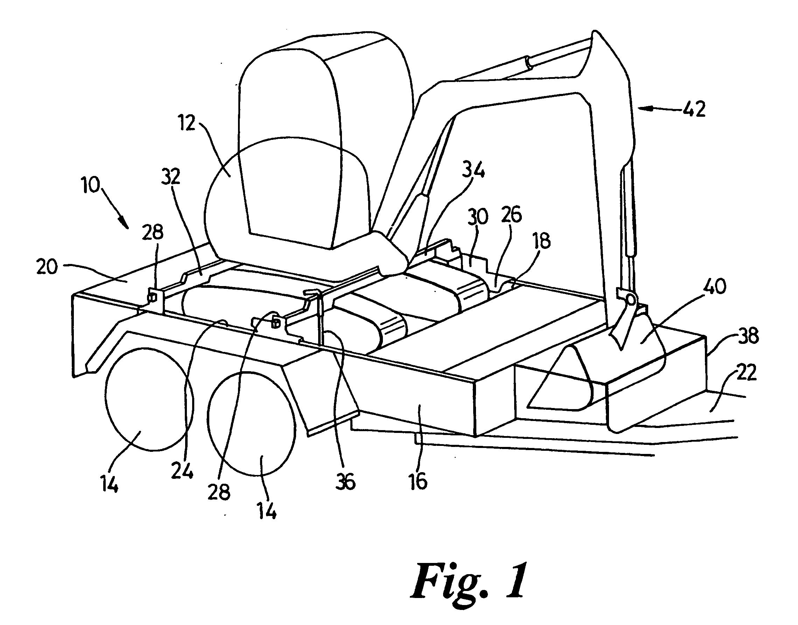

Figure 1 shows a flat bed trailer 10 of the invention having a mechanical digger 12 positioned thereon. The main body of the flat bed trailer 10 is of conventional design, having road-engaging wheels 14, and low, parallel sidewalls 16,18. The flat bed trailer 10 further comprises a releasable back wall 20 permitting positioning of the mechanical digger 12 in the trailer 10, and a front coupling section 22 enabling the flat bed trailer 10 to be coupled to a suitable transportation vehicle such as a van or lorry. The flat bed trailer 10 further comprises a pair of brackets 24,26; the bracket 24 is mounted by way of bolts on to the top of the sidewall 16, and the bracket 26 is mounted by way of bolts on to the side wall 18. The bracket 24 has a pair of spaced apart jaws 28 upstanding therefrom, and the bracket 26 has a pair of spaced apart collars 30 upstanding therefrom. A pair of spaced apart bars 32,34 extend sideways across the flat bed trailer 10. One end of each bar 32,34 is located in a collar 30, and the other end of each bar 32,34 is located in a jaw 28, this positioning acting to secure the bars 32,34 in place. A securing pin 36 disposed near to the sidewall 16 further restrains the motion of the front-most bar 34. A further securing pin disposed near to the other sidewall 18 also performs this function.

The flat bed trailer 10 further comprises a receptacle 38 which is located on the front coupling section 22. The receptacle 38 receives the bucket 40 of the mechanical digger 12, the bucket being attached to a moveable arm 42. The receptacle 38 acts to restrain the bucket 40 during transportation of the digger 12.

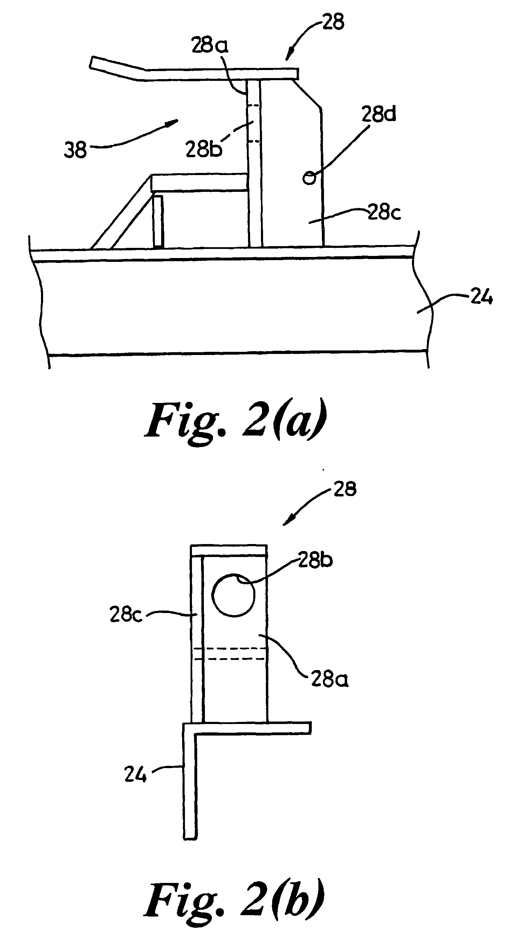

Figures 2 to 4 show some of the features depicted in Figure 1 in more detail, and identical numerals are used to depict such shared features. Figure 2 shows a jaw 28 in more detail. The jaw 28 defines a rectangular groove 38 which is sized to receive a bar 32,34. The jaw 28 has an upright wall 28a having an aperture 28b formed therein which is sized to receive a locating member formed on a bar 32,34. The jaw 28 further comprises an upright flat 28c having an aperture 28d formed therein. The aperture 28d secures one end of a chain, and the other end of the chain (not shown) is connected to a lynch pin (not shown) which, in use, is positioned in a receiving aperture formed in the retaining member of the bar.

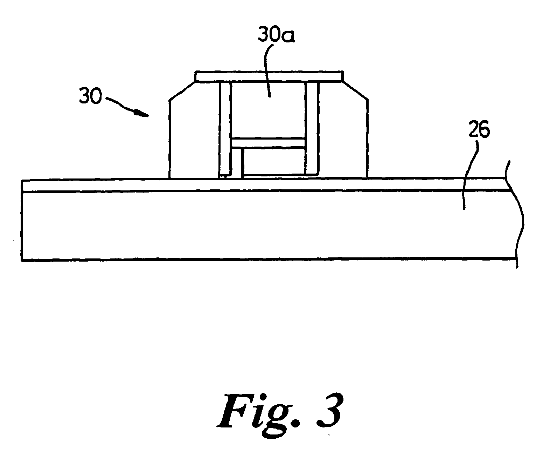

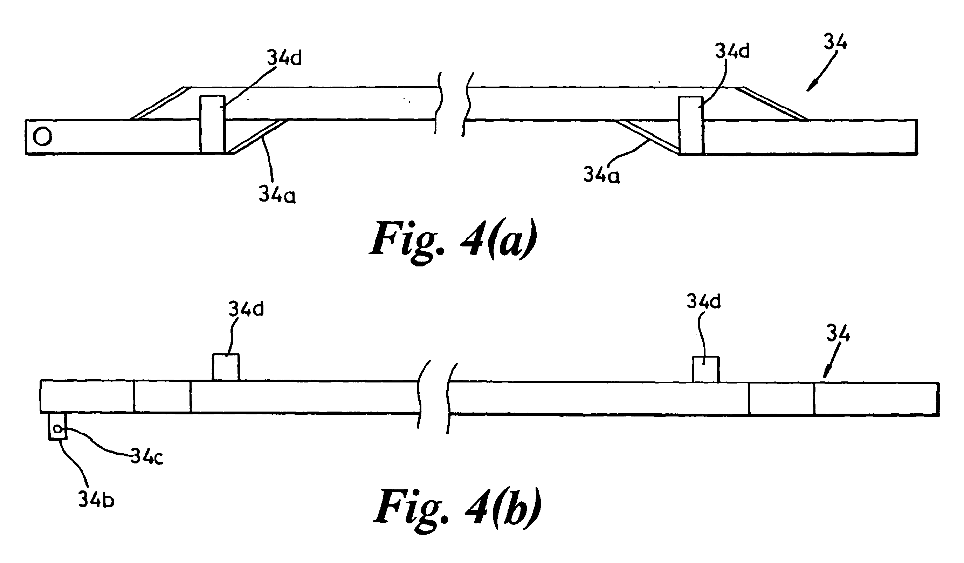

Figure 3 shows a collar 30 in more detail. It can be seen that the collar 30 defines an aperture 30a which is sized to receive one end of a bar 32,34. Figure 4 shows the front-most bar 34 in more detail. The bar 34 is stepped, having a dog leg arrangement which raises the height of the bar in its middle section. This increases the clearance of the bar in the region of contact or near-contact with the item of heavy machinery disposed in the trailer 10, and enables a better fit to the majority of heavy items commonly transported. Additionally, the stepped portion provides additional restraining surfaces 34a for preventing unwanted movement of the item of heavy machinery. The front-most bar 34 has a locating member 34b formed at one end thereof which in use is positioned in the aperture 28b of the respective jaw 28. The locating member 34b has a vertical bore 34c formed therein for receiving a lynch pin. The front-most bar 34 further comprises channels 34d, which may be in the form of external flutes, for receiving the securing pins 36.

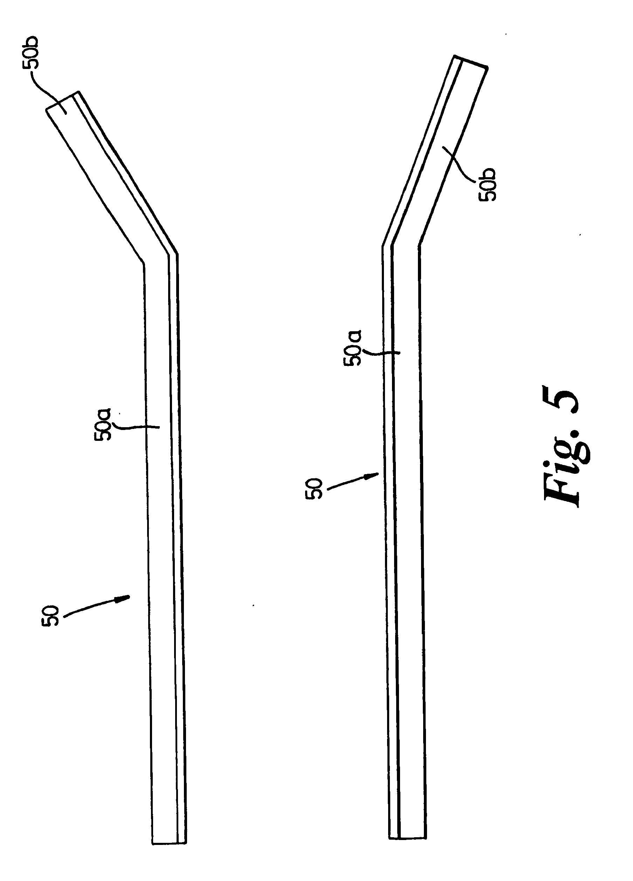

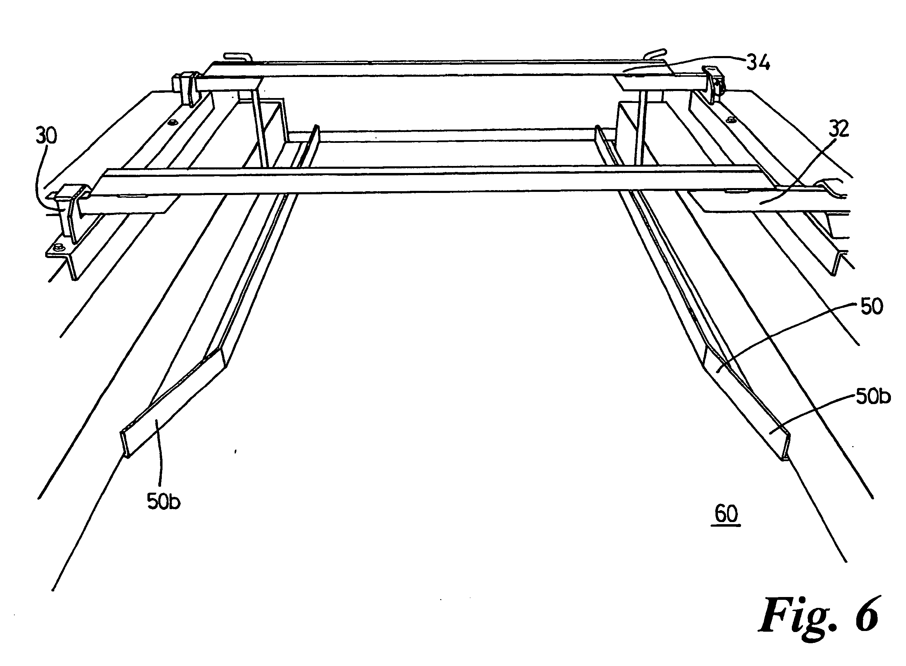

Figure 5 shows a pair of guide bars 50 having a main elongate section 50a and a shorter elongate section 50b which is angled with respect to the main elongate section 50a. As shown in Figure 6, in use the guide bars 50 are disposed longitudinally on the floor 60 of the trailer 10, with the angled, shorter elongate sections 50b positioned adjacent the back wall of the trailer. The guide bars 50 provide restraint against sideways motion of the item of heavy machinery during transportation, and have an additional advantage in aiding the location of the item of heavy machinery in the trailer. Other items described in connection with Figure 1 can be seen in Figure 6, and identical numerals are used to denote such shared features.

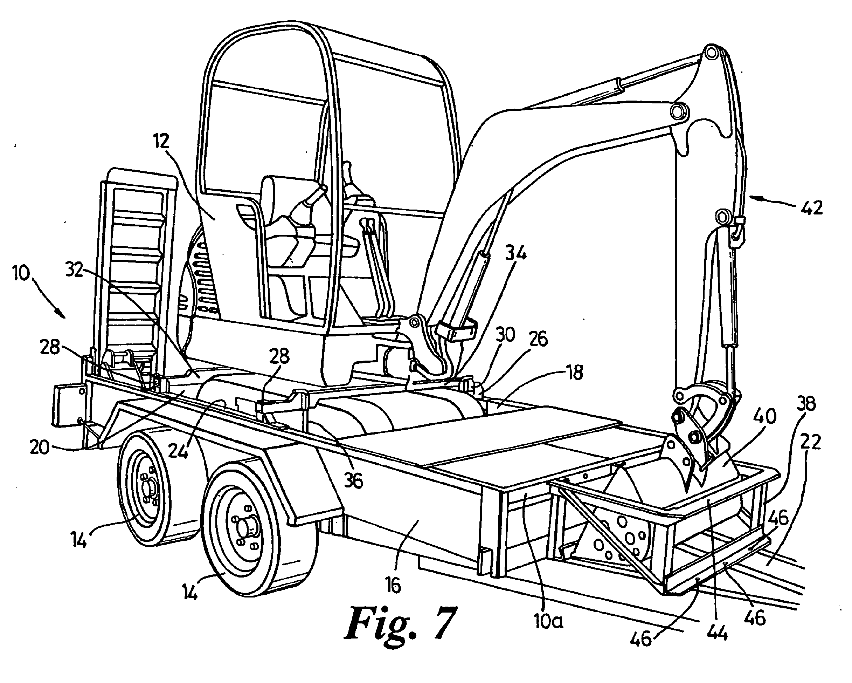

Figure 7 shows the flat bed trailer 10 of Figure 1 in somewhat more detail. Identical numerals are used to denote the features that are shared between Figures 1 and 7. It can be seen that the receptacle 38 is a framework arrangement comprising vertically, horizontally and diagonally disposed frame members. In an alternative embodiment, the front portion of the receptacle 38 does not include the uppermost horizontal frame member 44 shown in Figure 7. Rather, the front portion of the receptacle includes a pair of diagonal frame members in the form of a downwardly facing chevron, in which the tip of the chevron defined by the meeting of the two diagonal frame members is in engagement with a lower horizontal frame member. Either embodiment is conveniently attached to a standard flat bed trailer by way of bolts 46. Preferably, as shown in Figure 7, the framework is attached to the front coupling section 22 and the front 10a of the main body of the flat bed trailer 10. Thus the floor of the receptacle 38 comprises frame members associated with the front coupling section 22, and the rear wall of the receptacle 38 comprises frame members associated with the front of the main body of the flat bed trailer 10. Representative dimensions of the receptacle 38 are height 280mm, length 525mm and width 970mm. A representative sidewall height is 405mm.

In another embodiment, a flat bed trailer has a rear-most bar which is fully detachable and a front-most bar in the form of a permanently located "swing" bar which can be swung into and out of its restraining position. A locating member such as a pin can be used to retain the front-most bar in its restraining position. The rear-most bar can be positioned and held in its restraining position using suitable means, such as the jaws described with reference to Figures 1 to 4. It is envisaged that, in at least some applications, it may be possible to utilise a bar of permanently fixed position. For example, it may be possible for the front-most bar to be of permanently fixed position extending substantially laterally across the trailer, with the rear-most bar being moveable and positionable in bar retaining means.

An advantageous feature of the invention is that it is highly cost effective and convenient to retrofit the restraining bars and the means for retaining the restraining bars in place to an existing, conventional flat bed trailer (which does not fall within the scope of claim 1) in order to produce a flat bed trailer according to claim 1. This can be done by bolting on or otherwise attaching a pair of brackets which carry means for receiving the bars to the sides of the flat bed trailer. Other ways of retrofitting and indeed other ways of securing the bars to the flat bed trailers would readily suggest themselves to one skilled in the art. However, it should be noted that dedicated trailers in accordance with the invention may be provided which are supplied with the bars and associated retaining means already fitted.

## Claims

1. A flat bed trailer (10) for transporting heavy machinery including: a floor (60); a plurality of wheels (14) suitable for travel over roads; coupling means (22) for coupling the trailer to a towing vehicle; a pair of longitudinally extending side walls (16, 18) which extend at least 300 mm and less than one metre above the level of the floor;
**characterised in that** the flat bed trailer further includes:
a plurality of restraining bars (32, 34) each disposable substantially laterally across the trailer from one side wall to the other side wall to restrain an item of heavy machinery when positioned in the trailer; bar retaining means (28, 30) for releasably retaining at least one of the restraining bars in its restraining position, wherein the bar retaining means include a plurality of bar receiving elements receiving the at least one restraining bar; and at least a pair of brackets (24, 26), each located on top of a respective side wall; in which the bar retaining means are disposed on the brackets so that the bar retaining means are disposed on top of the side walls.

2. A flat bed trailer according to Claim 1 having a pair of spaced apart restraining bars.

3. A flat bed trailer according to Claim 2 in which the pair of restraining bars are spaced by at least 750mm.

4. A flat bed trailer according to any previous claim for transporting a mechanical digger.

5. A flat bed trailer according to any one of claims 1 to 4 which is for transporting a mechanical digger having a bucket attached to a moveable arm, the flat bed trailer further including: a receptacle (38) disposed on the coupling means for receiving and restraining the bucket of the mechanical digger.

6. A flat bed trailer according to Claim 5 including a pair of spaced apart restraining bars, the bars being spaced so that in use one of the pair of restraining bars restrains a front portion of the mechanical digger, and the other one of the pair of restraining bars restrains a rear portion of the mechanical digger.

7. A flat bed trailer according to claim 5 or claim 6 in which the receptacle includes a frame.

8. A flat bed trailer according to any one of claims 5 to 7 in which the receptacle defines a substantially cuboid internal volume in which the bucket is received.

9. A flat bed trailer according to any previous claim in which the bar retaining means releasably retain all of the restraining bars in their restraining positions.

10. A flat bed trailer according to any previous claim further including a plurality of tracks (50) disposed substantially longitudinally on the floor of the trailer for restraining the item of machinery when disposed in the trailer.

11. A flat bed trailer according to any previous claim in which the restraining bars are stepped.

12. A method of restraining an item of heavy machinery including the steps of: providing a flat bed trailer for transporting an item of heavy machinery, the flat bed trailer including a floor; a plurality of wheels suitable for travel over roads; coupling means for coupling the trailer to a towing vehicle; a pair of longitudinally extending side walls which extend at least 300 mm and less than one metre above the level of the floor; a plurality of restraining bars; bar retaining means which include a plurality of bar receiving elements; and at least a pair of brackets, each located on top of a respective side wall; in which the bar retaining means are disposed on the brackets so that the bar retaining means are disposed on top of the side walls;
positioning an item of heavy machinery in the trailer; and
restraining the item of heavy machinery by disposing each of the restraining bars substantially laterally across the trailer from one side wall to the other side wall, at least one of the restraining bars being releasably retained in its restraining position by the bar retaining means, the plurality of bar receiving elements receiving the at least one of the restraining bars.

## Patentansprüche

1. Flachbett-Auflieger (10) zum Transport schwerer Maschinen, mit einem Boden (60), mehreren Rädern (14), die auf Straßen laufen können, einer Kupplungs-Einrichtung (22) zum Ankuppeln des Aufliegers an ein Zugfahrzeug, ein Paar in Längsrichtung verlaufender Seitenwände (16, 18), die sich wenigstens 300 mm und weniger als 1 m über das Niveau des Bodens erstrecken, **dadurch gekennzeichnet, daß** der Flachbett-Auflieger ferner folgende Teile aufweist: mehrere Zugstäbe (32, 34), von denen jeder sich im wesentlichen seitlich über den Auflieger von der einen Seitenwand zu der anderen Seitenwand erstreckt, um ein Teil der schweren Maschinenanlage festzuhalten, wenn diese auf dem Auflieger positioniert ist; eine Stabhalterungs-Einrichtung (28, 30), mit der wenigstens einer der Halterungsstäbe in seiner Halterungslage lösbar festgehalten wird, wobei die Stabhalterungs-Einrichtung mit mehreren Stabaufnahme-Elementen versehen ist, die wenigstens einen Halterungsstab aufnehmen und mit wenigstens einem Paar Träger (24, 26), von denen jeder oben auf einer entsprechenden Seitenwand angeordnet ist, wobei die Stabhalterungs-Einrichtungen auf den Trägern so liegen, daß die Stabhalterungs-Einrichtungen oben auf den Seitenwänden liegen.

2. Flachbett-Auflieger nach Anspruch 1, **gekennzeichnet durch** ein Paar mit Abstand nebeneinander liegendeR Zugstäbe.

3. Flachbett-Auflieger nach Anspruch 2, **dadurch gekennzeichnet, daß** das Paar Zugstäbe um wenigstens 750 mm beabstandet ist.

4. Flachbett-Auflieger nach einem der vorhergehenden Ansprüche zum Transportieren eines mechanischen Löffelbaggers.

5. Flachbett-Auflieger nach einem der Ansprüche 1 bis 4 zum Transport eines mechanischen Löffelbaggers, der eine an einem beweglichen Arm angebrachte Schaufel aufweist und außerdem einen Behälter (38) auf der Kupplungs-Einrichtung zur Aufnahme und zum Festhalten der Schaufel des mechanischen Löffelbaggers.

6. Flachbett-Auflieger nach Anspruch 5, **gekennzeichnet durch** ein Paar mit Abstand getrennte Zugstangen, wobei die Stangen einen solchen Abstand aufweisen, daß bei Benutzung eine der beiden Zugstangen einen vorderen Teil des mechanischen Löffelbaggers hält, während die andere Zugstange des Zugstangen-Paares einen hinteren Teil des mechanischen Löffelbaggers festhält.

7. Flachbett-Auflieger nach Anspruch 5 oder 6, **dadurch gekennzeichnet, daß** der Behälter einen Rahmen aufweist.

8. Flachbett-Auflieger nach einem der Ansprüche 5 bis 7, **dadurch gekennzeichnet, daß** der Behälter ein im wesentlichen würfelähnliches Innenvolumen aufweist, das die Schaufel aufnimmt.

9. Flachbett-Auflieger nach einem der vorhergehenden Ansprüche, **dadurch gekennzeichnet, daß** die Stabhalterungs-Einrichtung alle haltenden Stäbe in ihren Halterungspositionen lösbar zurückhält.

10. Flachbett-Auflieger nach einem der vorhergehenden Ansprüche, **gekennzeichnet durch** mehrere Führungsschienen (50), die auf dem Boden des Aufliegers im wesentlichen in Längsrichtung angeordnet sind und dazu dienen, das Maschinenanlagenteil festzuhalten, wenn es sich auf dem Auflieger befindet.

11. Flachbett-Auflieger nach einem der vorhergehenden Ansprüche, **dadurch gekennzeichnet, daß** die Halterungsstäbe gestuft sind.

12. Verfahren zum Festhalten eines Teils einer Schwermaschinen-Anlage, **gekennzeichnet durch** die folgenden Schritte: Schaffen eines Flachbett-Aufliegers zum Transport eines Teils einer Schwermaschinen-Anlage, wobei der Flachbett-Auflieger einen Boden und mehrere Räder aufweist, die auf Straßen laufen können; ferner mit einer Kupplungs-Vorrichtung zum Kuppeln des Aufliegers an ein Zugfahrzeug, ein Paar sich in Längsrichtung erstreckende Seitenwände, die wenigstens 300 mm und weniger als 1 m über dem Niveau des Bodens liegen; ferner **gekennzeichnet durch** Zugstäbe und Zugstab-Vorrichtungen, die mehrere Stabaufnahme-Elemente aufweisen und **durch** wenigstens ein Paar Träger, von denen jeder oben auf einer entsprechenden Seitenwand liegt, wobei die Stabhalterungs-Vorrichtungen auf den Trägern so angeordnet sind, daß die Stabhalterungs-Vorrichtungen oben auf den Seitenwänden liegen; Positionieren eines Teils der Schwermaschinen-Anlage auf dem Auflieger und Festhalten des Teils der Schwermaschinen-Anlage **dadurch**, daß jeder der Halterungsstäbe von der einen Seitenwand zu der anderen Seitenwand im wesentlichen seitlich über den Auflieger angeordnet wird, wenigstens einer der Halterungsstäbe lösbar in der Halterungsposition **durch** die Halterungs-Vorrichtung zurückgehalten wird und mehrere Stabaufnahme-Elemente wenigstens einen der Halterungsstäbe aufnehmen.

## Revendications

1. Remorque-plateau (10) pour transporter de la machinerie lourde comprenant : un plancher (60) ; une pluralité de roues (14) adaptées pour un déplacement sur route ; un moyen de couplage (22) pour coupler la remorque à un véhicule de remorquage ; une paire de parois latérales s'étendant longitudinalement (16, 18) qui s'étendent d'au moins 300 mm et de moins d'un mètre au-dessus du niveau du plancher ;
**caractérisée en ce que** la remorque-plateau comprend en outre :
une pluralité de barres de restreinte (32, 34) pouvant être chacune disposées sensiblement latéralement à travers la remorque d'une paroi latérale à l'autre paroi latérale pour assurer la restreinte d'un élément de machinerie lourde positionné dans la remorque ; un moyen de rétention de barre (28, 30) pour assurer la rétention libérable d'au moins l'une des barres de restreinte à sa position de restreinte, dans lequel le moyen de rétention de barre comprend une pluralité d'éléments de réception de barre recevant l'au moins une barre de restreinte ; et au moins une paire de supports (24, 26) situés chacun dessus une paroi latérale respective, dans laquelle le moyen de rétention de barre est disposé sur les supports de sorte que le moyen de rétention de barre soit disposé dessus les parois latérales.

2. Remorque-plateau selon la revendication 1, comportant une paire de barres de restreinte espacées.

3. Remorque-plateau selon la revendication 2, dans laquelle la paire de barres de restreinte sont espacées d'au moins 750 mm.

4. Remorque-plateau selon l'une quelconque des revendications précédentes pour transporter une pelle mécanique.

5. Remorque-plateau selon l'une quelconque des revendications 1 à 4, destinée à transporter une pelle mécanique comportant un godet attaché à un bras mobile, la remorque-plateau comprenant en outre : un réceptacle (38) disposé sur le moyen de couplage pour recevoir et restreindre le godet de la pelle mécanique.

6. Remorque-plateau selon la revendication 5, comprenant une paire de barres de restreinte espacées, les barres étant espacées de sorte que, en utilisation, l'une de la paire de barres de restreinte restreint une portion avant de la pelle mécanique, et l'autre de la paire de barres de restreinte restreint une portion arrière de la pelle mécanique.

7. Remorque-plateau selon la revendication 5 ou 6, dans laquelle le réceptacle comprend un châssis.

8. Remorque-plateau selon l'une quelconque des revendications 5 à 7, dans laquelle le réceptacle définit un volume interne sensiblement cuboïde dans lequel le godet est reçu.

9. Remorque-plateau selon l'une quelconque des revendication précédentes, dans laquelle le moyen de rétention de barres assure la rétention de manière libérable de toutes les barres de restreinte à leur position de restreinte.

10. Remorque-plateau selon l'une quelconque des revendications précédentes, comprenant en outre une pluralité de rails (50) disposés sensiblement longitudinalement sur le plancher de la remorque pour restreindre l'élément de machinerie lorsqu'il est disposé dans la remorque.

11. Remorque-plateau selon l'une quelconque des revendications précédentes, dans laquelle les barres de restreinte sont échelonnées.

12. Procédé de restreinte d'un élément de machinerie lourde comprenant les étapes de : la fourniture d'une remorque-plateau pour transporter un élément de machinerie lourde, la remorque-plateau comprenant : un plancher ; une pluralité de roues adaptées pour un déplacement sur route ; un moyen de couplage pour coupler la remorque à un véhicule de remorquage ; une paire de parois latérales s'étendant longitudinalement qui s'étendent d'au moins 300 mm et de moins d'un mètre au-dessus du niveau du plancher ; une pluralité de barres de restreinte ; un moyen de rétention de barre qui comprend une pluralité d'éléments de réception de barre ; et au moins une paire de supports disposés chacun dessus une paroi latérale respective ; dans lequel le moyen de rétention de barre est disposé sur les supports de sorte que le moyen de rétention de barre soit disposé dessus les parois latérales ;
le positionnement d'un élément de machinerie lourde dans la remorque ; et
la restreinte de l'élément de machinerie lourde en disposant chacune des barres de restreinte sensiblement latéralement à travers la remorque d'une paroi latérale à l'autre paroi latérale, au moins l'une des barres de restreinte étant retenue de manière libérable à sa position de restreinte par le moyen de rétention de barre, la pluralité d'éléments de réception de barre recevant l'au moins une des barres de restreinte.
